(19) Europäisches Patentamt
European Patent Office
Office européen des brevets

(11) **EP 1 895 159 A2**

(12) **EUROPEAN PATENT APPLICATION**

(43) Date of publication:
**05.03.2008 Bulletin 2008/10**

(51) Int Cl.:
*F04B 27/08* (2006.01)      *F16D 27/112* (2006.01)

(21) Application number: **07115295.3**

(22) Date of filing: **30.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **01.09.2006 JP 2006238021**

(72) Inventors:
• YOKOMACHI, Naoya
  Kariya-shi Aichi 448-8671 (JP)
• NAKAMURA, Norihiko
  Kariya-shi Aichi 448-8671 (JP)
• MATSUI, Hajime
  Kariya-city Aichi 448-8661 (JP)
• NAKASHIMA, Masafumi
  Kariya-city Aichi 448-8661 (JP)

(74) Representative: **TBK-Patent**
  **Bavariaring 4-6**
  **80336 München (DE)**

(71) Applicants:
• KABUSHIKI KAISHA TOYOTA JIDOSHOKKI
  Kariya-shi,
  Aichi-ken (JP)
• Denso Corporation
  Kariya-city, Aichi-pref., 448-8661 (JP)

(54) **Rotation apparatus having electromagnetic clutch**

(57)    The outer peripheral portion of a drive shaft (16) has a first restriction surface (61) in an integrated manner. The inner peripheral portion of a boss (12a) has a second restriction surface (62) in an integrated manner. The second restriction surface (62) faces the first restriction surface (61) in a radial direction. When the electromagnetic coil (56a) is not energized, there is a disconnection distance D between the first friction surface (51a) and the second friction surface (52a). The distance between the axis (CL) and the outermost periphery (P1) of the second friction surface (52a) is the clutch radius R. A noise preventing space (60) is provided at a point spaced from the bearing (82) to the front by a beam size L2 between the first restriction surface (61) and the second restriction surface (62). The size d of the noise preventing space (60) satisfies $d < D \times (L2)/R$. Accordingly, abnormal noises coming from the electromagnetic clutch (50) are suppressed (Fig. 4).

Fig.4

## Description

BACKGROUND OF THE INVENTION

The present invention relates to a rotation apparatus having an electromagnetic clutch.

Japanese Laid-Open Patent Publication No. 2005-83325 discloses a conventional swash plate type compressor having an electromagnetic clutch.

An electromagnetic clutch is switchable between a state where the drive force of an external drive source is transmitted to a drive shaft and a state where the drive force is disconnected from the drive shaft. When the electromagnetic clutch is in a disconnection state, the armature, the hub and the drive shaft stop, while the external drive source can rotate the rotor. When the rotation and the impact of the vehicle are transmitted to the compressor, the armature, the hub and the drive shaft vibrate.

At least a portion of the front end of the drive shaft protrudes to the front from the front seal and is located inside the boss. That is to say, the drive shaft protrudes to the front from the front bearing like a cantilever. In other words, the front end of the drive shaft is supported by the front bearing like a cantilever. The armature and the hub attached to the front end of the drive shaft function as a weight. In addition, the front seal for sealing the drive shaft is located between the hub and the front bearing. That is to say, it is difficult to reduce the length in the portion of the drive shaft between the front bearing and the hub in the axial direction. The front end of the vibrating shaft easily swings in the direction perpendicular to the axis of the drive shaft. That is to say, the armature and the hub both easily incline relative to the axis.

As a result, even when the electromagnetic clutch is in a disconnection state, the rotor can make contact with the armature. In the case where the difference in the relative speed between the rotor in a rotating state and the armature in a stationary state is great, the electromagnetic clutch may make an abnormal noise.

SUMMARY OF THE INVENTION

An objective of the present invention is to provide a rotation apparatus capable of suppressing abnormal noises of an electromagnetic clutch.

According to one aspect of the present invention, a rotation apparatus which is driven by an external drive source is provided. The rotation apparatus includes a housing. The drive shaft extends in a front-rear direction. A front portion of the housing has a boss which protrudes to the front. The cylindrical boss has an axis of the drive shaft at the center. At least a portion of the front end of the drive shaft is located inside the boss. A bearing supports the drive shaft so that the drive shaft is rotatable relative to the housing. A seal is placed inside the housing. The front end of the shaft protrudes to the front from the seal. The seal seals the drive shaft in front of the bearing. A rotation mechanism is provided inside the housing. The rotation mechanism is actuated by rotation of the drive shaft. The electromagnetic clutch is switchable between a state where the drive force of the external drive source is transmitted to the drive shaft and a state where the drive force is disconnected from the drive shaft. The electromagnetic clutch includes a rotor which is rotatably supported by the boss. The rotor is operatively linked to the external drive source. The rotor has a first friction surface facing forward. A stator is contained in the rotor. An electromagnetic coil is incorporated in the stator. A disc-shaped armature has a second friction surface facing rearward. The second friction surface faces the first friction surface. The hub links the armature to the drive shaft. The outer peripheral portion of the drive shaft or the outer peripheral portion of the hub has an integrated first restriction surface. The inner peripheral portion of the boss has an integrated second restriction surface. The second restriction surface faces the first restriction surface in radial direction. When the electromagnetic coil is not energized, there is a disconnection distance D between the first friction surface and the second friction surface in the axial direction. The distance between the axis and the outermost periphery of the second friction surface is a clutch radius R. A noise preventing space is provided at a point spaced from the bearing by beam size L2 to the front and between the first restriction surface and the second restriction surface. The size d of the noise preventing space satisfies $d < D \times (L2)/R$.

Other aspects and advantages of the invention will become apparent from the following description, taken in conjunction with the accompanying drawings, illustrating by way of example the principles of the invention.

BRIEF DESCRIPTION OF THE DRAWINGS

The features of the present invention that are believed to be novel are set forth with particularity in the appended claims. The invention, together with objects and advantages thereof, may best be understood by reference to the following description of the presently preferred embodiments together with the accompanying drawings in which:

Fig. 1 is an enlarged schematic view of Fig. 5;

Fig. 2 is a schematic view showing a second friction surface of Fig. 1 in a state of contact with a first friction surface;

Fig. 3 is a schematic view showing a second restriction surface of Fig. 1 in a state of contact with a first restriction surface;

Fig. 4 is a longitudinal cross-sectional view showing a compressor according to a first embodiment of the present invention;

Fig. 5 is an enlarged cross-sectional view showing the electromagnetic clutch of Fig. 4;

Fig. 6 is an enlarged cross-sectional view showing a compressor according to a second embodiment;

Fig. 7 is an enlarged cross-sectional view showing a compressor according to a third embodiment;

Fig. 8 is an enlarged cross-sectional view showing a compressor according to a fourth embodiment; and

Fig. 9 is an enlarged cross-sectional view showing a compressor according to a fifth embodiment.

DETAILED DESCRIPTION OF THE PREFERRED EMBODIMENTS

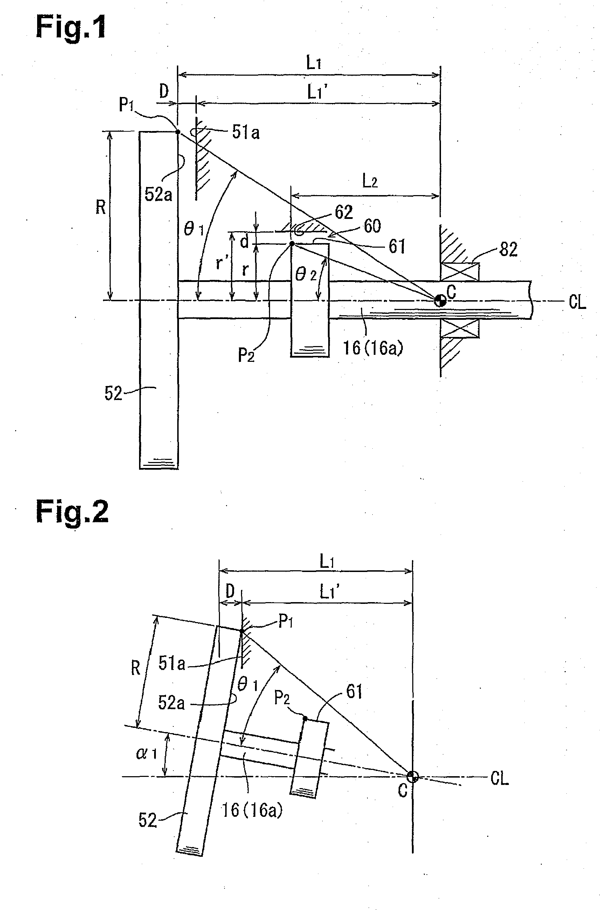

Figs. 1 to 5 show a first embodiment according to the present invention. In each drawing, the left is the front and the right is the rear.

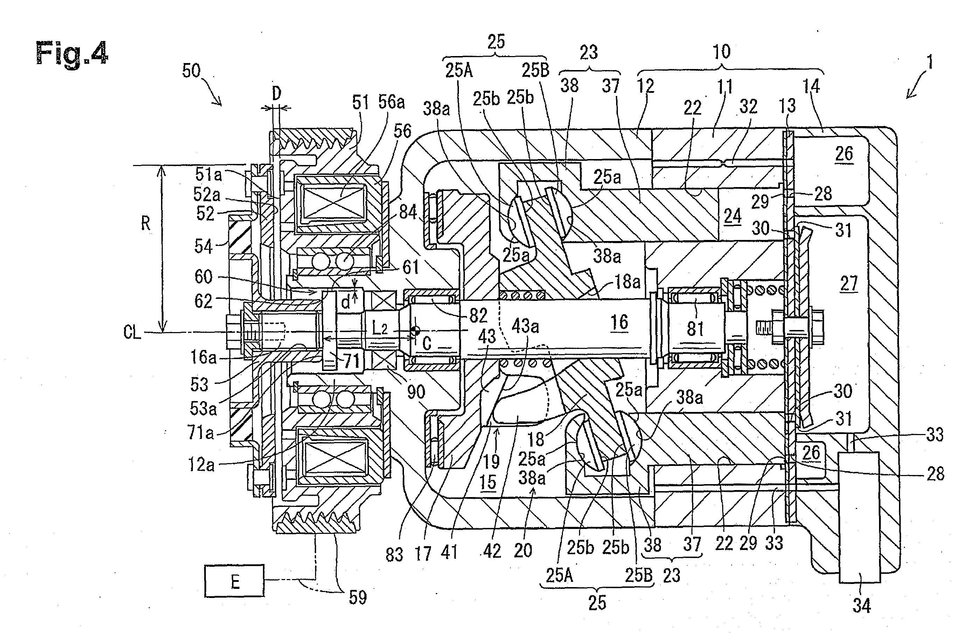

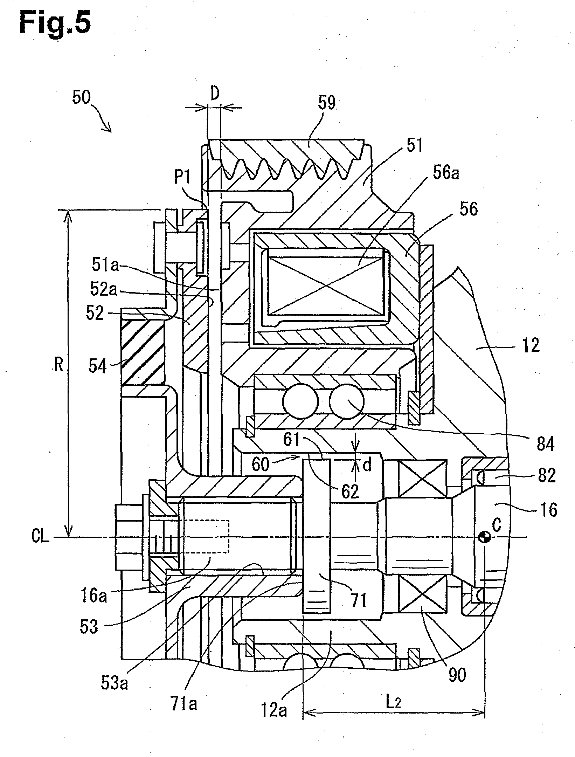

Figs. 4 and 5 show a compressor 1 according to the first embodiment. The compressor 1 is a variable displacement swash plate type compressor. $CO_2$ is used as the refrigerant of the compressor 1. The compressor 1 is provided with a housing 10, a drive shaft 16, a compression mechanism 20, and an electromagnetic clutch 50. That is to say, the compressor 1 is a rotation apparatus having an electromagnetic clutch 50.

The housing 10 has a cylinder block 11, a front housing member 12, and a rear housing member 14. The front housing member 12 is joined to the front end of the cylinder block 11. The rear housing member 14 is joined to the rear end of the cylinder block 11 with a valve assembly 13 in between.

A crank chamber 15 is defined in the housing 10. The crank chamber 15 is located between the cylinder block 11 and the front housing member 12. The drive shaft 16 extends through the crank chamber 15, the cylinder block 11, and the front housing member 12. A rear bearing 81 supports the drive shaft 16 so that the drive shaft 16 is rotatable relative to the cylinder block 11. A front bearing 82 supports the drive shaft 16 so that the drive shaft 16 is rotatable relative to the front housing member 12. The rear bearing 81 and the front bearing 82 are both radial bearings. The front housing member 12 contains a front seal 90 which is located in front of the front bearing 82. The front seal 90 seals the drive shaft 16 to the front housing member 12.

A boss 12a is formed in the front portion of the front housing member 12. The cylindrical boss 12a protrudes to the front along the axis CL of the drive shaft 16. The front end (front end portion) of the drive shaft 16 is referred to as a shaft front end 16a. At least a portion of the shaft front end 16a is located inside the boss 12a. The shaft front end 16a protrudes to the front from the front seal 90. The front seal 90 is a general oil seal. The front seal 90 has, for example, an annular body made of a metal and a lip made of rubber which is integrated with the annular body. That is to say, the front seal 90 barely applies force for restraining the shaft front end 16a, even when the shaft front end 16a swings relative to the axis CL. Accordingly, the shaft front end 16a is in such a state as to be supported by the front bearing 82 like a cantilever.

The center point at the front end of the front bearing 82 is referred to as a bearing front center C. That is to say, the shaft front end 16a can swing in the direction perpendicular to the axis CL with the bearing front center C at a fixed point. In particular, since the refrigerant of the compressor 1 according to the present embodiment is $CO_2$, the drive shaft 16 tends to have a smaller diameter in comparison with compressors in which the refrigerant is, for example, a chlorofluorocarbon.gas. That is to say, the drive shaft 16 according to the present embodiment has a lower rigidity, and thus, very easily swings in comparison with compressors in which the refrigerant is a chlorofluorocarbon gas.

An electromagnetic clutch 50 is switchable between a state where the drive force from an engine E, which functions as an external drive source, is transmitted to the drive shaft 16 and a state where the drive force is disconnected from the drive shaft 16. The engine E is a drive force supply for driving the vehicle.

The electromagnetic clutch 50 has a rotor 51, a stator 56, an armature 52, and a hub 53.

As shown in Figs. 4 and 5, the rotor 51 is located outside and in front of the housing 10. The rotor bearing 84 is a radial bearing which supports the rotor 51 so that the rotor 51 is rotatable relative to the outer peripheral surface of the boss 12a. The rotor 51 is operatively linked to the engine E via a belt 59. A first friction surface 51a is formed at the front end of the rotor 51. The stator 56 is secured to the front end of the front housing member 12. The stator 56 appears as if it were contained within the rotor 51. An electromagnetic coil 56a is incorporated in the stator 56. The disc-shaped armature 52 has an opening at the center. A second friction surface 52a is formed at the rear end of the armature 52. The second friction surface 52a is placed so as to face the first friction surface 51a. The first friction surface 51a is an electric friction surface of the rotor 51, and the second friction surface 52a is an electric friction surface of the armature 52. The hub 53 is cylindrical and has a flange at the front end. The hub 53 has an engaging hole 53a for engaging the shaft front end 16a at the center. The armature 52 is attached to the hub 53 by means of an elastic member 54 so as to be movable relative to the hub 53. As a result, the hub 53 links the armature 52 to the drive shaft 16. The elastic member 54 is joined to the outer peripheral surface of the hub 53 and the armature 52.

When the electromagnetic coil 56a is energized, the magnetic force of the stator 56 attracts the armature 52. Accordingly, the armature 52 moves toward the stator 56 against the elastic force of the elastic member 54. The second friction surface 52a makes contact with the first friction surface 51a. As a result, the drive force of the engine E is transmitted from the rotor 51 to the armature 52, the hub 53 and the drive shaft 16. Accordingly, the armature 52, the hub 53 and the drive shaft 16 rotate together with the rotor 51.

In contrast, when the electromagnetic coil 56a is not energized, the stator 56 does not attract the armature 52 as shown in Figs. 4 and 5. As a result, the elastic force of the elastic member 54 returns the armature 52 to its original location. That is to say, the second friction surface 52a moves away from the first friction surface 51a. Accordingly, the armature 52, the hub 53 and the drive shaft 16 do not rotate together with the rotor 51. Accordingly, the drive force of the engine E is not transmitted to the drive shaft 16, and thus, the drive shaft 16 stops.

Therefore, when the engine E operates, the electromagnetic clutch 50 is controlled in accordance with the situation, and thus, switching is carried out so that the drive force of the engine E is either transmitted to the drive shaft 16 or disconnected from the drive shaft 16. As a result, the drive shaft 16 rotates in an appropriate manner.

An annular large diameter member 71 is engaged with the shaft front end 16a, which is located inside the boss 12a. The diameter of the outer peripheral surface of the large diameter member 71 is greater than the diameter of the shaft front end 16a. The large diameter member 71 is originally a different member from the drive shaft 16. As the material for the large diameter member 71, a metal material, such as iron or aluminum, a hard resin, such as a PPS resin (poly phenylene sulfide resin), or a general material, such as a compound material, or a combination of these may be used. The outer peripheral surface of the large diameter member 71 is a first restriction surface 61. In other words, the outer peripheral portion of the drive shaft 16 has the first restriction surface 61 in an integrated manner. The large diameter member 71 is a large diameter portion of the drive shaft 16 and formed so as to have a larger diameter. The first restriction surface 61a is the outer peripheral surface of the large diameter portion.

In addition, the inner peripheral surface of the boss 12a is a second restriction surface 62. That is to say, the inner peripheral portion of the boss 12a has the second restriction surface 62 in an integrated manner. The second restriction surface 62 faces the first restriction surface 61 in the radial direction.

A case where, as shown in Figs. 4 and 5, the electromagnetic coil 56a is not energized, that is to say, the electromagnetic clutch 50 is in a disconnection state, is described. The radius of the outermost periphery of the second friction surface 52a (outermost armature periphery P1) with the axis CL at the center is referred to as a clutch radius R. The distance between the first friction surface 51a and the second friction surface 52a in the axial direction is referred to as a disconnection distance D. In general, the clutch radius R is approximately 40 mm to 60 mm, and the disconnection distance D is approximately 0.1 mm to 0.3 mm.

A noise preventing space 60 is set between the first restriction surface 61 and the second restriction surface 62. The size d of the noise preventing space 60 satisfies $d < D \times (L2)/R$ ... Formula (1) at a point that is spaced from the bearing front center C to the front by a beam size L2. For example, in the case where the clutch radius R = 60 mm, the disconnection distance D = 0.35 mm, and the beam size L2 = 40 mm, the space $d < 0.2$ mm.

Formula (1) is derived as follows in reference to Figs. 1 to 3. In Figs. 1 to 3, the left is the front and the right is the rear. As shown in Fig. 1, the second friction surface 52a is located at a first distance L1 from the bearing front center C to the front. The first friction surface 51a is located at a second distance L1' from the bearing front center C to the front (L1' < L1).

As shown in Fig. 1, the outermost periphery (outermost shaft periphery P2) at the front end of the first restriction surface 61 is located at a beam size L2 from the bearing front center C to the front. The radius of the outermost shaft periphery P2 with the axis CL at the center is referred to as a first radius r. The radius of the second restriction surface 62 with the axis CL at the center is referred to as a second radius r' (r < r').

A first line C-P1 which connects any given point in the outermost armature periphery P1 to the bearing front center C inclines at a first angle θ1 relative to the axis CL. A second line C-P2 which connects any given point in the outermost shaft periphery P2 to the bearing front center C inclines at a second angle θ2 relative to the axis CL.

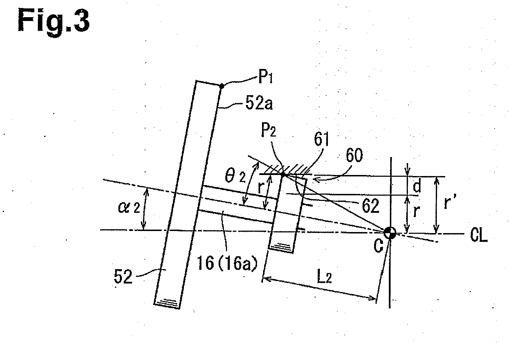

Next, a case where, as shown in Figs. 2 and 3, the shaft front end 16a swings relative to the axis CL is described. Strictly speaking, the shaft front end 16a is flexed so as to make a curve. However, the displacement of the drive shaft 16 is microscopic, and therefore, it can be assumed that the shaft front end 16a bends with the bearing front center C functioning as a bending point, and inclines in a straight line relative to the axis CL.

In the case where, as shown in Fig. 2, the second friction surface 52a makes contact with the first friction surface 51a, that is to say, in the case where the outermost armature periphery P1 makes contact with the rotor 51, the shaft front end 16a inclines by a first inclination angle α1 relative to the axis CL. The relationship between the first inclination angle α1, the disconnection distance D and the clutch radius R is obtained as follows. Since the first inclination angle α1 is microscopic, the approximation formula of formula 2-5 is applied.

$$D = L_1 - L_1' \qquad \text{... Formula 2-1}$$

$$= L_1 - \sqrt{R^2 + L_1^2} \times \cos(\theta_1 + \alpha_1) \qquad \text{... Formula 2-2}$$

$$= L_1 - \sqrt{R^2 + L_1^2} \left\{ \cos\theta_1 \times \cos\alpha_1 - \sin\theta_1 \times \sin\alpha_1 \right\} \qquad \text{... Formula 2-3}$$

$$\sin\theta_1 = \frac{R}{\sqrt{R^2 + L_1^2}} \quad , \quad \cos\theta_1 = \frac{L_1}{\sqrt{R^2 + L_1^2}} \qquad \text{... Formula 2-4}$$

$$\sin\alpha_1 \approx \alpha_1 \ , \quad \cos\alpha_1 \approx 1 \qquad \text{... Formula 2-5}$$

$$D \approx L_1 - \sqrt{R^2 + L_1^2} \left\{ \frac{L_1}{\sqrt{R^2 + L_1^2}} \times 1 - \frac{R}{\sqrt{R^2 + L_1^2}} \times \alpha_1 \right\} \text{... Formula 2-6}$$

$$= L_1 - L_1 + R \times \alpha_1 \qquad \text{... Formula 2-7}$$

$$= R \times \alpha_1 \qquad \text{... Formula 2-8}$$

$$\alpha_1 = D / R \qquad \text{... Formula 2-9}$$

The relational formula 2-9 representing the relationship between the first inclination angle $\alpha 1$, the disconnection distance D, and the clutch radius R is derived in this manner.

In the case where, as shown in Fig. 3, the first restriction surface 61 makes contact with the second restriction surface 62, that is to say, in the case where the outermost shaft periphery P2 makes contact with the inner peripheral portion of the boss 12a, the shaft front end 16a inclines by a second inclination angle $\alpha 2$ relative to the axis CL. The relationship between the second inclination angle $\alpha 2$, the size d of the noise preventing space 60 and the beam size L2 is obtained as follows. Since the second inclination angle $\alpha 2$ is microscopic, the approximation formula 3-5 is applied.

$$d = r' - r \qquad \text{... Formula 3-1}$$

$$= \sqrt{r^2 + L_2^2} \times \sin(\theta_2 + \alpha_2) - r \qquad \text{... Formula 3-2}$$

$$= \sqrt{r^2 + {L_2}^2} \left\{ \sin\theta_2 \times \cos\alpha_2 + \cos\theta_2 \times \sin\alpha_2 \right\} - r \quad \text{... Formula 3-3}$$

$$\sin\theta_2 = \frac{r}{\sqrt{r^2 + {L_2}^2}} \ , \quad \cos\theta_2 = \frac{L_2}{\sqrt{r^2 + {L_2}^2}} \quad \text{... Formula 3-4}$$

$$\sin\alpha_2 \approx \alpha_2 \ , \quad \cos\alpha_2 \approx 1 \quad \text{... Formula 3-5}$$

$$d \approx \sqrt{r^2 + {L_2}^2} \left\{ \frac{r}{\sqrt{r^2 + {L_2}^2}} \times 1 - \frac{L_2}{\sqrt{r^2 + {L_2}^2}} \times \alpha_2 \right\} - r \quad \text{... Formula 3-6}$$

$$= r + L_2 \times \alpha_2 - r \quad \text{... Formula 3-7}$$

$$= L_2 \times \alpha_2 \quad \text{... Formula 3-8}$$

$$\alpha_2 = d / L_2 \quad \text{... Formula 3-9}$$

The relational formula 3-9 representing the relationship between the second inclination angle $\alpha2$, the size d of the noise preventing space 60 and the beam size L2 is derived in this manner.

In order to prevent the second friction surface 52a from making contact with the first friction surface 51a, it is necessary for the first restriction surface 61 to make contact with the second restriction surface 62. That is to say, in order to prevent the outermost armature periphery P1 from making contact with the rotor 51, it is necessary for the outermost shaft periphery P2 to make contact with the inner peripheral surface of the boss 12a. Accordingly, it is necessary for the first inclination angle $\alpha1$ and the second inclination angle $\alpha2$ to satisfy the formula 4-1($\alpha1 > \alpha2$). $d < D \times (L2)/R$ ... Formula (1) is gained by substituting the formula 2-9 and the formula 3-9 into the formula 4-1.

$$\alpha_1 > \alpha_2 \quad \text{... Formula 4-1}$$

$$D / R > d / L_2 \quad \text{... Formula 4-2}$$

$$d < D \times L_2 / R \quad \text{... Formula 1}$$

As shown in Fig. 4, the rear end of the hub 53 contacts and is stopped by the front surface 71a of the large diameter member 71. Accordingly, the large diameter member 71 determines the depth of insertion of the hub 53 when the hub 53 is mounted at the shaft front end 16a. That is to say, the depth of insertion of the hub 53 can be easily set, even in the case where it is difficult to provide a recess which is hit by and stops the hub 53 in a thin drive shaft 16.

A lug plate 17 and a swash plate 18 are placed inside the crank chamber 15. The lug plate 17 is attached to the drive shaft 16 so that the two rotate integrally. A thrust bearing 83 is placed between the lug plate 17 and the front housing member 12. The swash plate 18 is basically in disc-shaped, and the base of the swash plate 18 is made of an iron based material, such as spherical graphite cast iron (FCD) or bearing steel (SUJ2). A sliding layer is formed as the surface layer of the swash plate 18 (front surface and rear surface of swash plate 18) through thermal spray coating of, for example, a Cu-Sn-Pb based alloy or an Al-Si based alloy. The compression mechanism 20 is a swash plate type compression mechanism.

The center portion of the swash plate 18 has a through hole 18a through which the drive shaft 16 extends. The drive shaft 16 makes contact with the peripheral surface of the through hole 18a, and thus, supports the swash plate 18 so that the swash plate 18 is slidable and inclinable. A hinge mechanism 19 is placed between the lug plate 17 and the swash plate 18.

As shown in Fig. 4, the hinge mechanism 19 includes two first protrusions 41 and one second protrusion 42. The first protrusions 41 protrude to the rear from the lug plate 17. The first protrusion 41 on the top in the drawing is omitted. The second protrusion 42 protrudes to the front from the swash plate 18. The first protrusions 41 are lug plate protrusions, and the second protrusion 42 is a swash plate protrusion. The end of the second protrusion 42 is located between the two first protrusions 41. Accordingly, the rotational force of the lug plate 17 is transmitted from the first protrusions 41 to the second protrusion 42, and thus, transmitted to the swash plate 18.

The lug plate 17 has a cam portion 43 which is located at the base of the first protrusions 41. The cam portion 43 has a cam surface 43a which faces the swash plate 18. The end of the second protrusion 42 slides on the cam surface 43a. Accordingly, the cam surface 43a guides the inclination of the swash plate 18.

The cylinder block 11 has the cylinder bores 22 placed at equal angular intervals around the axis CL of the drive shaft 16. The respective cylinder bores 22 extend through the cylinder block 11 in the front-rear direction (left-right direction in the drawing). A one-head type piston 23 is contained in each cylinder bore 22. The valve assembly 13 closes the opening in the rear of the cylinder bores 22, and the pistons 23 close the opening in the front of the cylinder bores 22. As a result, a compression chamber 24 is defined in each cylinder bore 22. As the pistons 23 move, the volume of the compression chambers 24 changes.

Each piston 23 has a columnar head 37 and a skirt 38 located in the front portion of the head 37. The head 37 is inserted into the cylinder bore 22. The skirt 38 is located in the crank chamber 15 outside the cylinder bore 22. The head 37 and the skirt 38 are made of an aluminum based metal material. The aluminum based metal material includes at least either pure aluminum or an aluminum alloy. A pair of shoe seats 38a are provided as recesses inside the skirt 38. A pair of shoes 25 are contained inside the skirt 38. The pair of shoes 25 are formed of a first shoe 25A and a second shoe 25B, each of which is in hemispherical form. The second shoe 25B is located between the first shoe 25A and the compression chamber 24. The second shoe 25B is more likely to receive compression reaction force in comparison with the first shoe 25A. The material for the first shoe 25A and the second shoe 25B is at least one of an iron based material, such as SUJ2, an aluminum based material, such as an aluminum alloy or an argil alloy, or an alloy of these. A surface treatment, such as Ni plating, may be carried out on the surface of the first shoe 25A and the second shoe 25B. In the present specification, "hemisphere" not only means a portion gained by dividing a sphere into two, but also includes a portion having a part of a spherical surface.

The first shoe 25A and the second shoe 25B each have a hemispherical surface 25a and a flat sliding surface 25b which is located on the side opposite to the hemispherical surface 25a. Each spherical surface 25a is received by a spherical surface in the corresponding shoe seat 38a. The hemispherical surface 25a of the first shoe 25A and the hemispherical surface 25a of the second shoe 25B are on the same spherical surface. Each piston 23 is engaged and held in the outer peripheral portion of the swash plate 18 through the first shoe 25A and the second shoe 25B. The sliding surface 25b of the first shoe 25A makes contact with the front surface of the swash plate 18. The sliding surface 25b of the second shoe 25B makes contact with the rear surface of the swash plate 18. Accordingly, when the swash plate 18 rotates due to the rotation of the drive shaft 16, the pistons 23 reciprocate linearly in the front-rear direction.

A suction chamber 26 and a discharge chamber 27 are respectively defined between the valve assembly 13 and the rear housing member 14. The valve assembly 13 has suction ports 28 and suction valves 29 which are located between the respective compression chambers 24 and the suction chamber 26, and furthermore, has discharge ports 30 and discharge valves 31 which are located between the respective compression chambers 24 and the discharge chamber 27.

The lug plate 17, the swash plate 18, the hinge mechanism 19, the pistons 23, the shoes 25, the cylinder bores 22, the suction ports 28, the suction valves 29, the discharge ports 30 and the discharge valves 31 form the compression mechanism 20. The compression mechanism 20 draws in, compresses, and afterwards, discharges refrigerant. The compression mechanism 20 is a rotation mechanism provided inside the housing 10 of the compressor 1. The compression mechanism 20 is operable through rotation of the drive shaft 16.

$CO_2$ is used as the refrigerant for the refrigeration circuit. The refrigerant gas flows into the suction chamber 26 from an external circuit (not shown). When the respective pistons 23 moves from the top dead center toward the bottom dead center, the refrigerant gas in the suction chamber 26 passes through the suction port 28 and the suction valve 29 and is drawn into the compression chambers 24. When the pistons 23 move from the bottom dead center toward the top dead center, the refrigerant gas in the compression chambers 24 is compressed and passes through the discharge port 30 and the discharge valve 31 so as to be discharged into the discharge chamber 27. The refrigerant gas flows out from the discharge chamber 27 to the external circuit.

The housing 10 has an air bleed passage 32, an air supply passage 33 and a control valve 34. The air bleed passage 32 connects the crank chamber 15 to the suction chamber 26. The air supply passage 33 connects the discharge chamber 27 to the crank chamber 15. A publicly known control valve 34, for example an electromagnetic valve (schematically shown in Fig. 4), is placed in the middle of the air supply passage 33.

The external control on the power supply adjusts the degree of opening of the control valve 34, and thus, the balance between the amount of high pressure discharge gas which is guided out and flows into the crank chamber 15 through the air supply passage 33 and the amount of gas which is guided out and flows out from the crank chamber 15 through the air bleed passage 32 is controlled, so that the pressure in the crank chamber 15 is determined. As the pressure in the crank chamber 15 changes, the difference in pressure between the crank chamber 15 and the compression chambers 24 changes, so that the inclination angle of the swash plate 18 changes. Accordingly, the stroke of the pistons 23 is adjusted. That is to say, the displacement of the compression mechanism 20 is adjusted.

When the degree of opening of the control valve 34 is decreased, the pressure in the crank chamber 15 lowers. Therefore, the inclination angle of the swash plate 18 increases, the stroke of the pistons 23 increases, and the displacement of the compression mechanism 20 increases. In contrast, when the degree of opening of the control valve 34 is increased, the pressure in the crank chamber 15 rises. Therefore, the inclination angle of the swash plate 18 decreases, the stroke of the pistons 23 decreases, and the displacement of the compression mechanism 20 decreases.

The compressor 1 and the external circuit form a vehicle refrigeration circuit and air-conditions the inside of the vehicle.

The first embodiment has the following advantages.

(1) The size $d$ of the noise preventing space 60 satisfies $d < D \times (L2)/R$ ... Formula (1).

When the electromagnetic clutch 50 disconnects the drive force of the engine E from the drive shaft 16 in a state where the engine E is driven, the armature 52, the hub 53 and the drive shaft 16 stop while the rotor 51 keeps rotating. When vibration and impact of the vehicle in which the compressor 1 is mounted are transmitted to the compressor 1, the armature 52, the hub 53, and the drive shaft 16 also vibrate.

In the present embodiment, when the amount of fluctuation of the vibrating shaft front end 16a increases, the first restriction surface 61 makes contact with the second restriction surface 62. Accordingly, the inclination angle of the drive shaft 16 is kept from increasing. As a result, the second friction surface 52a is prevented from unnecessarily becoming of such a state as to make contact with the first friction surface 51a. Therefore, a state where the rotor 51 in a rotating state and the armature 52 in a stationary state make contact with a great difference in the relative speed is prevented.

Accordingly, abnormal noises coming from the electromagnetic clutch 50 are suppressed. As a result, passengers inside the vehicle barely feel any discomfort due to abnormal noises.

(2) The first restriction surface 61 is the outer peripheral surface of the large diameter member 71, which is a separate body mounted on the drive shaft 16. Therefore, even in the case where an already existing drive shaft 16 is used, the present invention is easily implemented, and the costs of manufacture are reduced.

(3) The rotation apparatus is a compression mechanism 20 which draws in, compresses, and afterward, discharges $CO_2$, which functions as a refrigerant. In the case where $CO_2$ is the refrigerant, the pressure of the compressed refrigerant has a very high value of approximately 15 MPa. Accordingly, high sealing performance is required in the front seal 90 between the drive shaft 16 and the housing 10. The smaller the diameter of the sealed portion of the drive shaft 16 is, the easier it is to secure sealing performance between the housing 10 and the drive shaft 16. Therefore, the diameter of the sealed portion of the drive shaft 16 and the diameter of the shaft front end 16a tend to be set small. That is to say, the rigidity of the drive shaft 16 is low and the front end of the drive shaft 16 easily swings. Accordingly, the present embodiment has further significant effects in the present invention.

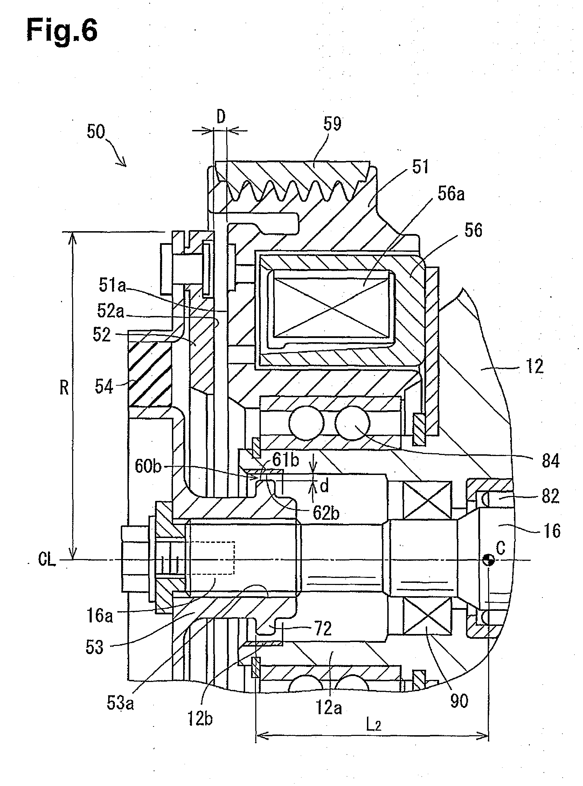

Fig. 6 shows a second embodiment of the present invention. As shown in Fig. 6, a compressor according to the second embodiment has a large diameter portion 72 formed in the hub 53. The large diameter member 71 is omitted. A buffering member 12b is provided on the inner peripheral surface of the boss 12a. Like or the same reference numerals are given to those components that are like or the same as those in the compressor 1 according to the first embodiment, and detailed explanations are omitted.

The large diameter portion 72 is a flange which protrudes outward from the hub 53 made of a metal in the radial direction. The large diameter portion 72 is inside the boss 12a. The outer peripheral surface of the large diameter portion 72 is a first restriction surface 61b. That is to say, the outer peripheral portion of the hub 53 has a first restriction surface 61b in an integrated manner. In other words, part of the outer peripheral surface of the hub 53 is made greater, so that the large diameter portion 72 is formed integrally with the hub 53. The first restriction surface 61b can be assumed to be an outer peripheral surface of the hub 53.

The buffering member 12b is made of a PDS resin and is cylindrical, and is engaged with the inner peripheral surface of the boss 12a. The inner peripheral surface of the buffering member 12b is a second restriction surface 62b. That is to say, the inner peripheral portion of the boss 12a has a second restriction surface 62b in an integrated manner. The second restriction surface 62b faces the first restriction surface 61b in the radial direction.

A noise preventing space 60b is provided between the first restriction surface 61b and the second restriction surface 62b. The size d of the noise preventing space 60b satisfies $d < D \times (L2)/R$ ... Formula (1) at a point that is spaced by the distance corresponding to the beam size L2 from the bearing front center C to the front.

The second embodiment has the same advantages as the first embodiment, and in addition, has the following advantages.

(4) The first restriction surface 61b is an outer peripheral surface of the large diameter portion 72 formed in the hub 53. Therefore, the configuration of the present invention is easy to implement. That is to say, the costs of manufacture are reduced.

(5) A buffering member 12b is provided on the second restriction surface 62b. The buffering member 12b is a buffering layer for buffering collision of the first restriction surface 61b against the second restriction surface 62b. Therefore, even small abnormal noises can be suppressed when the first restriction surface 61b makes contact with the second restriction surface 62b in such a state that there is no difference in the relative speed.

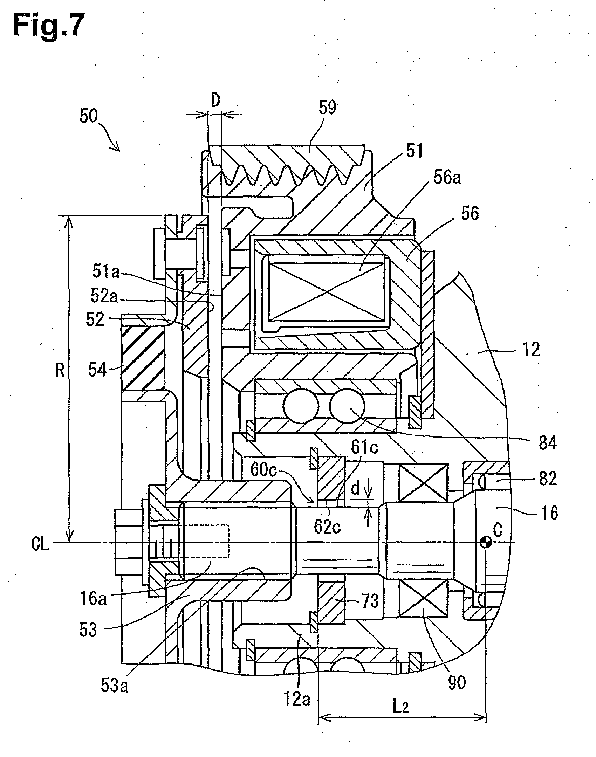

Fig. 7 shows a third embodiment of the present invention. As shown in Fig. 7, the compressor according to the third embodiment has a small diameter member 73 provided in the boss 12a.

The outer peripheral surface of the drive shaft 16 forms a first restriction surface 61c according to the third embodiment. That is to say, the outer peripheral portion of the drive shaft 16 has a first restriction surface 61c in an integrated manner.

The annular small diameter member 73 which is a separate member from the boss 12a is engaged with the inner peripheral surface of the boss 12a. The material for the small diameter member 73 is the same as that for the large diameter member 71. The inner peripheral surface of the small diameter member 73 is a second restriction surface 62c. That is to say, the inner peripheral portion of the boss 12a has a second restriction surface 62c in an integrated manner. The second restriction surface 62c faces the first restriction surface 61c in the radial direction.

A noise preventing space 60c is provided between the first restriction surface 61c and the second restriction surface 62c. The size d of the noise preventing space 60c satisfies $d < D \times (L2) /R$ ... Formula (1) at a point spaced by the distance corresponding to the beam size L2 from the bearing front center C to the front.

The third embodiment has the following additional advantages.

(6) The second restriction surface 62c is an inner peripheral surface of the small diameter member 73 secured to the boss 12a. Accordingly, the configuration of the present invention is easy to implement. As a result, the costs of manufacture are reduced.

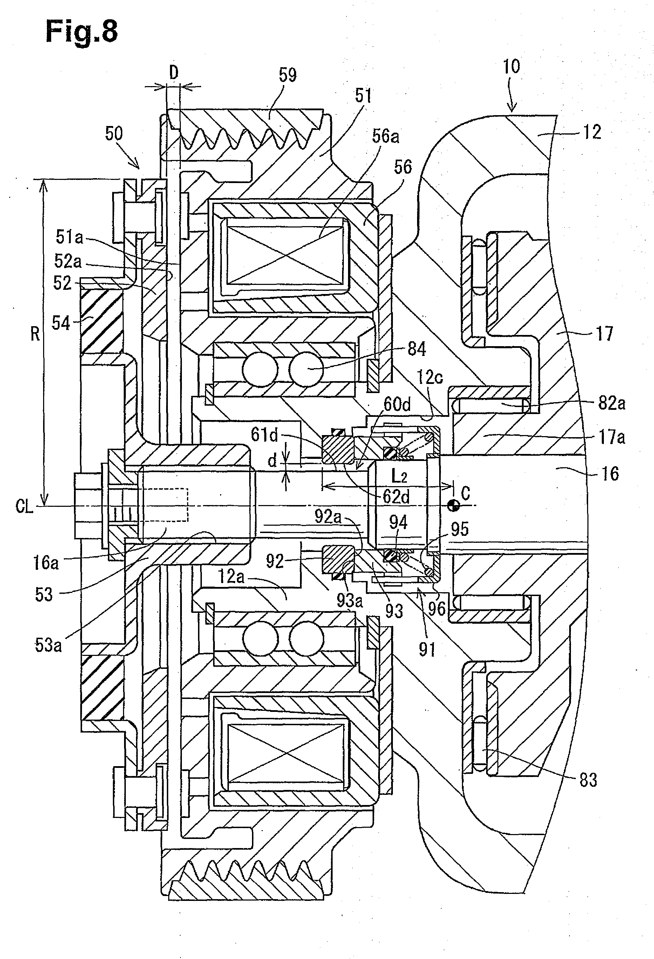

Fig. 8 shows a fourth embodiment of the present invention. The compressor according to the fourth embodiment has a mechanical seal 91 instead of the front seal 90.

As shown in Fig. 8, the diameter of the front bearing 82a in the fourth embodiment is much greater than that of the front bearing 82 in the first embodiment. As a result, the mechanical seal 91 can be mounted on the drive shaft 16, despite being greater than the front seal 90. The lug plate 17 has a cylindrical portion 17a which protrudes to the front so as to cover the drive shaft 16. The front bearing 82a supports the drive shaft 16 and the cylindrical portion 17a so that the drive shaft 16 and the cylindrical portion 17a are rotatable relative to the front housing member 12.

The mechanical seal 91 has a fixed ring 92, a rotational ring 93, a gasket 94, a spring 95, and a seal case 96. The fixed ring 92 is secured to the inner peripheral surface of a shaft hole 12c. The rear end of the fixed ring 92 has a fixed seal end surface 92a. The seal case 96 is attached to the drive shaft 16. The seal case 96 contains the rotational ring 93 and the spring 95. The rotational ring 93 is a movable ring which is attached to the drive shaft 16 inside the housing 10. The front end of the rotational ring 93 has a rotational seal end surface 93a which slides against the fixed seal end surface 92a. The gasket 94 is attached to the drive shaft 16 on the rear surface of the rotational ring 93. The annular gasket 94 seals the space between the rotational ring 93 and the drive shaft 16. The spring 95 is attached to the seal case 96. The spring 95 presses the rotational ring 93 against the fixed ring 92.

That is to say, the spring 95 presses the rotational seal end surface 93a against the fixed seal end surface 92a. Therefore, the high pressure refrigerant, for example $CO_2$, can be prevented from passing through the gap between the shaft hole 12c and the drive shaft 16 and leaking out. The mechanical seal 91 reliably seals the gap.

The outer peripheral surface of the drive shaft 16 forms the first restriction surface 61d according to the fourth embodiment. That is to say, the outer peripheral portion of the drive shaft 16 has a first restriction surface 61d in an integrated manner.

The inner peripheral surface of the fixed ring 92 forms a second restriction surface 62d. That is to say, the inner peripheral portion of the boss 12a has a second restriction surface 62d in an integrated manner. The second restriction surface 62d faces the first-restriction surface 61d in the radial direction.

A noise preventing space 60d is provided between the first restriction surface 61d and the second restriction surface 62d. The size d of the noise preventing space 60d satisfies $d < D \times (L2)/R$ ... Formula (1) at a point spaced by the distance corresponding to a beam size L2 from the center of the front end of the front bearing 82a (bearing front center C) to the front. The distance between the seal case 96 and the inner peripheral surface of the shaft hole 12c is set larger than the noise preventing space 60d. That is to say, the distance between the outer peripheral surface of the rotational ring 93 and the inner peripheral surface of the shaft hole 12c is larger than the noise preventing space 60d. In addition, the distance between the spring 95 and the inner peripheral surface of the shaft hole 12c is greater than the noise preventing space 60d.

The fourth embodiment has the following additional advantage.

(7) The fixed ring 92 in the mechanical seal 91 is used as the small diameter member. Therefore, it is not necessary to separately prepare a small diameter member for the compressor. That is to say, the costs of manufacture are reduced.

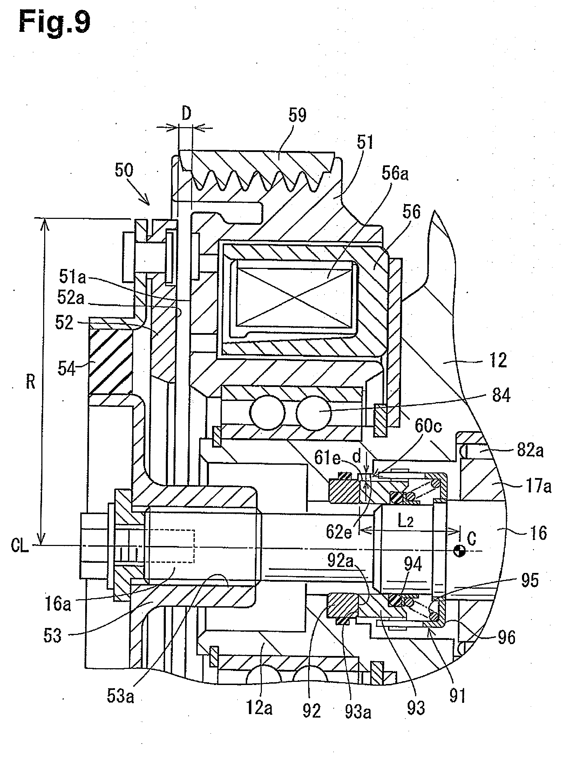

Fig. 9 shows a fifth embodiment of the present invention. The compressor according to the fifth embodiment also has a mechanical seal 91. The rotational ring 93 of the mechanical seal 91 functions as the large diameter member. As shown in Fig. 9, the first restriction surface 61e is the front portion of the outer peripheral surface of the rotational ring 93. That is to say, the outer peripheral portion of the drive shaft 16 has a first restriction surface 61e in an integrated manner. The second restriction surface 62e is an inner peripheral surface of the shaft hole 12c. That is to say, the inner peripheral portion of the boss 12a has a second restriction surface 62e in an integrated manner. The second restriction surface 62e faces the first restriction surface 61e in the radial direction.

A noise preventing space 60e is provided between the first restriction surface 61e and the second restriction surface 62e. The size d of the noise preventing space 60e satisfies $d < D \times (L2)/R$ ... Formula (1) at a point spaced by the distance corresponding to the beam size L2 from the bearing front center C to the front. The distance between the outer peripheral surface of the drive shaft 16 and the inner peripheral surface of the fixed ring 92 is set larger than the noise preventing space 60e.

The fifth embodiment has the following additional advantages.

(8) The rotational ring 93 of the mechanical seal 91 is used as the large diameter member. Therefore, it is not necessary to separately prepare a large diameter member for the compressor. That is to say, the costs of manufacture are reduced.

The first to fifth embodiments may be modified as follows.

In the first embodiment shown in Fig. 5, it is not necessary to mount a large diameter member 71 separated from the drive shaft 16 on the drive shaft 16.. Part of the drive shaft 16 may have a large diameter, for example, and thus, a large diameter portion may be formed integrally with the drive shaft. Thus, the first restriction surface 61 may be an outer peripheral surface of a large diameter portion provided around the drive shaft 16.

In the third embodiment shown in Fig. 7, it is not necessary to mount a small diameter member 73 separated from the boss 12a on the boss 12a. Part of the boss 12a may have a small diameter, for example, and thus, a small diameter portion may be formed integrally with the boss 12a. That is to say, the second restriction surface 62c may be an inner peripheral surface of a small diameter portion provided in the boss 12a.

In the second embodiment shown in Fig. 6, it is not necessary for the buffering member 12b to be made of a PPS resin. The buffering member 12b may be formed by pasting a general buffering material, such as rubber, an elastomer, a soft resin, a hard resin or a metal, to the inner peripheral surface of the boss 12a. In addition, the buffering member 12b may be formed by coating the inner peripheral surface of the boss 12a with one of these materials.

In addition, the buffering layer, for example, the buffering member 12b, may be provided on at least either the first restriction surface 61-61e or the second restriction surface 62-62e.

The outer peripheral portion of a drive shaft (16) has a first restriction surface (61) in an integrated manner. The inner peripheral portion of a boss (12a) has a second restriction surface (62) in an integrated manner. The second restriction surface (62) faces the first restriction surface (61) in a radial direction. When the electromagnetic coil (56a) is not energized, there is a disconnection distance D between the first friction surface (51a) and the second friction surface (52a). The distance between the axis (CL) and the outermost periphery (P1) of the second friction surface (52a) is the clutch radius R. A noise preventing space (60) is provided at a point spaced from the bearing (82) to the front by a beam size L2 between the first restriction surface (61) and the second restriction surface (62). The size d of the noise preventing space (60) satisfies $d < D \times (L2)/R$. Accordingly, abnormal noises coming from the electromagnetic clutch (50) are suppressed (Fig. 4).

**Claims**

1.  A rotation apparatus (1) driven by an external drive source (E), the rotation apparatus (1) comprising:

    a housing (10);
    a drive shaft (16) extending in a front-rear direction, a front portion of the housing (10) having a boss (12a) protruding to the front, the boss (12a) being cylindrical with an axis (CL) of the drive shaft (16) at the center, and at least a portion of a front end (16a) of the drive shaft (16) being located inside the boss (12a);
    a bearing (82,82a) for supporting the drive shaft (16) so that the drive shaft (16) is rotatable relative to the housing (10);
    a seal (90,91) placed inside the housing (10), the shaft front end (16a) protruding to the front from the seal (90,91), and the seal (90,91) sealing the drive shaft (16) in front of the bearing (82,82a);
    a rotation mechanism (20) provided inside the housing (10), the rotation mechanism (20) being operable through rotation of the drive shaft (16); and
    an electromagnetic clutch (50) which is switchable between a state where the drive force is transmitted from the external drive source (E) to the drive shaft (16) and a state where the drive force is disconnected from the drive shaft (16),
    wherein the electromagnetic clutch (50) has:

    a rotor (51) supported by the boss (12a) so as to be rotatable, the rotor (51) being operatively linked to the external drive source (E) and the rotor (51) having a first friction surface (51a) which faces the front;
    a stator (56) contained in the rotor (51), an electromagnetic coil (56a) being incorporated in the stator (56);
    a disc-shaped armature (52), the armature (52) having a second friction surface (52a) facing the rear, and the second friction surface (52a) facing the first friction surface (51a); and
    a hub (53) for linking the armature (52) to the drive shaft (16),
    the rotation apparatus being **characterized in that**
    an outer peripheral portion of the drive shaft (16) or an outer peripheral portion of the hub (53) has a first restriction surface (61, 61b, 61c, 61d, 61e) in an integrated manner, an inner peripheral portion of the boss (12a) has a second restriction surface (62, 62b, 62c, 62d, 62e) in an integrated manner, the second restriction surface (62-62e) facing the first restriction surface (61-61e) in a radial direction,

    wherein, when the electromagnetic coil (56a) is not energized, there is a disconnection distance D between the first friction surface (51a) and the second friction surface (52a) in the axial direction,
    wherein the distance between the axis (CL) and an outermost periphery (P1) of the second friction surface (52a) is a clutch radius R,
    wherein a noise preventing space (60, 60b, 60c, 60d, 60e) is provided at a point spaced by a distance corresponding to a beam size L2 from the bearing (82,82a) to the front between the first restriction surface (61-61e) and the second restriction surface (62-62e), and
    wherein the size d of the noise preventing space (60-60e) satisfies $d < D \times (L2)/R$.

2.  The rotation apparatus (1) according to claim 1, **characterized by** an annular large diameter member (71,93) provided around the drive shaft (16), the diameter of an outer peripheral surface of the large diameter member (71,93) being greater than the diameter of the drive shaft (16),
    wherein the first restriction surface (61,61e) is the outer peripheral surface of the large diameter member (71,93).

3.  The rotation apparatus (1) according to claim 2, **characterized in that** the seal (91) is a mechanical seal (91), the mechanical seal (91) having a fixed ring (92) and a movable ring (93) which slides against the fixed ring (92), the fixed ring (92) being provided in the housing (10), and the movable ring (93) being provided around the drive shaft (16), and
    wherein the large diameter member (93) is the movable ring (93).

4.  The rotation apparatus (1) according to claim 1, **characterized in that** the first restriction surface (61b) is an outer peripheral surface of the hub (53).

5.  The rotation apparatus (1) according to claim 1, **characterized by**:

    an annular small diameter member (73, 92) provided in the boss (12a), the diameter of an inner peripheral surface of the small diameter member (73, 92) being smaller than the diameter of the inner peripheral surface of the boss (12a),
wherein the second restriction surface (62c, 62d) is the inner peripheral surface of the small diameter member (73, 92).

6. The rotation apparatus (1) according to claim 5, **characterized in that** the seal (91) is a mechanical seal (91), the mechanical seal (91) having a fixed ring (92) and a movable ring (93) which slides against the fixed ring (92), the fixed ring (92) being provided in the housing (10), and the movable ring (93) being provided around the drive shaft (16), and
wherein the small diameter member (92) is the fixed ring (92).

7. The rotation apparatus (1) according to any of claims 1 to 6, **characterized in that** the rotation mechanism (20) is a compression mechanism (20), and the compression mechanism (20) draws in, compresses, and afterward, discharges $CO_2$ which functions as a refrigerant.

8. The rotation apparatus (1) according to claim 7, **characterized by**:

a buffering layer (12b) provided on at least either the first restriction surface (61-61e) or the second restriction surface (62-62e),
wherein the buffering layer (12b) buffers collision of the first restriction surface (61-61e) against the second restriction surface (62-62e).

# Fig.1

# Fig.2

# Fig.3

# Fig.4

EP 1 895 159 A2

# Fig.5

# Fig.6

# Fig.7

# Fig.8

# Fig.9

**EP 1 895 159 A2**

**REFERENCES CITED IN THE DESCRIPTION**

**Patent documents cited in the description**

- JP 2005083325 A